Europäisches Patentamt

European Patent Office

Office européen des brevets

(11) Numéro de publication: **0 066 476**

A1

# (12) DEMANDE DE BREVET EUROPEEN

(21) Numéro de dépôt: 82400234.9

(22) Date de dépôt: 10.02.82

(51) Int. Cl.³: **B 65 G 53/46**

(30) Priorité: 19.05.81 FR 8109956

(43) Date de publication de la demande:
08.12.82 Bulletin 82/49

(84) Etats contractants désignés:
BE DE FR GB LU

(71) Demandeur: Sprunck, Jules Emile
5 rue Joffre
F-57250 Moyeuvre Grande(FR)

(72) Inventeur: Sprunck, Jules Emile
5 rue Joffre
F-57250 Moyeuvre Grande(FR)

(74) Mandataire: Hasenrader, Hubert et al,
Cabinet BEAU DE LOMENIE 55, rue d'Amsterdam
F-75008 Paris(FR)

(54) Pompe distributrice de matière pulvérulente à alvéoles.

(57) La présente invention concerne la distribution contrôlée de matière pulvérulente entre un réservoir de stockage et un moyen de transport pneumatique ou mécanique. L'invention a pour objet une pompe distributrice à alvéoles constituée par un rotor cylindrique (2) d'axe horizontal (3) muni d'alvéoles (4) tournant dans un stator (0) recevant la matière pulvérulente par le haut (9) et la déversant par le bas (1) et caractérisée à la fois en ce que les alvéoles (4) sont évasés, espacés régulièrement, et disposés en quinconce ou en hélices, et en ce que le stator (0) comporte deux paires de patins d'étanchéité (6) (6') s'appliquant sans jeu contre la surface du rotor (2) (2'), les deux patins (6) et (6') d'une même paire étant distants l'un de l'autre d'une longueur circonférentielle suffisante pour réaliser l'étanchéité au passage de chacun des alvéoles (4).

COUPE AA

POMPE DISTRIBUTRICE DE MATIERES PULVERULENTES A ALVEOLES.

La présente invention concerne la distribution contrôlée de matières pulvérulentes entre un réservoir de stockage et une conduite dans laquelle les matières pulvérulentes doivent être mises en suspension dans un gaz porteur sous pression et en écoulement.

Pour une telle distribution, on connaît trois catégories distinctes de dispositifs :

1) les distributeurs pneumatiques, qui ne comportent aucune pièce tournante. Ce sont des récipients fermés, maintenus sous pression, comportant à leur base un siège calibré, et débitant la matière pulvérulente dans la conduite à alimenter, à travers le siège calibré, sous l'effet de la différence existant entre la pression intérieure du récipient et la pression de transport dans la conduite ;

2) les pompes à vis sans fin, souvent utilisées en cimenterie, disposées horizontalement, qui reçoivent d'une trémie située au-dessus d'elles, et non nécessairement sous pression, la matière pulvérulente, et qui la compriment en la faisant déboucher dans un diffuseur alimenté en gaz porteur. La partie tournante a ici la forme d'une vis sans fin d'une certaine longueur ;

3) les distributeurs tournants à cellules, constitués par un tambour ou cylindre qui tourne, autour d'un axe horizontal, qui reçoit la matière pulvérulente d'un récipient de stockage disposé au-dessus de lui, et dont la surface latérale est munie de cellules qui s'emplissent de matière en position haute et déversent cette matière en position basse dans la conduite de transport, où elle se trouve mise en suspension dans le gaz porteur. Cette conduite de transport est horizontale et passe juste sous le distributeur.

Ces trois catégories de distributeurs de matière pulvérulente dans une conduite sous pression et en écoulement ont chacune leurs avantages et leurs inconvénients propres. Il serait trop long de les passer tous en revue ici.

Il faut néanmoins rappeler que, ce que l'exploitant demande à de tels distributeurs, c'est d'assurer une mise en suspension homogène de la poudre dans le gaz porteur, d'assurer un débit régulier et déterminé de cette suspension homogène, et de pouvoir modifier ce débit à volonté. Or, en face de ces exigences, les distributeurs connus ne donnent généralement pas entière satisfaction. En particulier, l'un de leurs défauts fréquents est constitué par l'apparition de phénomènes de pulsations dans l'écoulement des matières pulvérulentes circulant dans la conduite de transport.

Un autre défaut courant des distributeurs connus est de ne pas assurer suffisamment bien le maintien de la concentration demandée (qui est le rapport entre le débit de poudre, en Kg, et le débit de gaz porteur, en Nm3) lorsqu'on modifie le débit de gaz porteur, malgré les asservissements qui peuvent exister entre le débit de poudre et le débit de gaz porteur.

Le but de la présente invention est de donner entière satisfaction à l'exploitant dans les exigences mentionnées ci-dessus, grâce à une nouvelle pompe distributrice, qui est en fait de la troisième catégorie, celle des distributeurs tournants à cellules.

A cet effet, la présente invention a pour objet une pompe distributrice à alvéoles, destinée à mettre en suspension une matière pulvérulente dans un gaz porteur sous pression et en écoulement horizontal, constituée par un rotor cylindrique d'axe horizontal muni d'alvéoles, tournant dans un stator, recevant la matière pulvérulente par le haut, depuis un récipient, et la déversant par le bas dans ledit gaz porteur, et caractérisée à la fois en ce que les alvéoles du rotor sont évasés et espacés régulièrement les uns des autres, dans un même plan tranversal du rotor, les alvéoles de deux plans transversaux voisins étant décalés les uns par rapport aux autres dans le sens circonférentiel de manière à assurer une disposition des alvéoles en quinconce ou en hélices, et en ce que le stator comporte deux paires de patins d'étanchéité s'appliquant sans jeu contre la surface dudit rotor et disposées de part et d'autre du plan vertical dudit axe horizontal du rotor, les deux patins d'une même paire étant distants l'un de l'autre, d'axe en axe, d'une longueur circonférentielle suffisante pour assurer l'étanchéité de chacun des alvéoles.

Suivant une caractéristique particulière de la présente invention, le rotor cylindrique est constitué par une pluralité de disques de même diamètre serrés les uns contre les autres entre deux flasques latéraux soumis chacun à l'action de plusieurs ressorts de compression disposés dans le stator, ces deux flasques comportant sur leurs circonférences extérieure et intérieure des bagues d'étanchéité, chacun desdits disques présentant sur sa face externe une rangée circulaire d'alvéoles régulièrement espacés.

Ces disques peuvent d'ailleurs avantageusement être tous identiques entre eux, chaque disque se trouvant, au montage du rotor, décalé du précédent d'une certaine distance circonférentielle, afin que l'ensemble des alvéoles compose à la surface du rotor une configuration générale en quinconce, ou bien encore une pluralité d'hélices.

Suivant une autre caractéristique particulière de la présente invention, facultative, mais éventuellement fort utile, chacun des alvéoles est constitué par une pièce amovible, réglable en position, elle-même disposée dans une cavité du rotor qui présente un profil approprié à ladite pièce amovible. Ainsi, d'une part cette pièce amovible constitue une pièce d'usure interchangeable, et, d'autre part, son enfoncement plus ou moins marqué dans la cavité permet à l'opérateur de modifier à volonté, dans une certaine gamme, le débit de matière pulvérulente pour une même vitesse de rotation du rotor.

Dans un premier mode particulier de réalisation de l'invention, les alvéoles sont coniques, le sommet du cône, qui constitue le fond de l'alvéole, étant arrondi.

Dans un mode de réalisation particulière de la précédente caractéristique selon l'invention applicable à des alvéoles coniques, la pièce conique est amovible, et elle est vissée dans une cavité cylindro-conique ; sa base s'appuie sur un ressort de compression, qui prend lui-même appui sur le fond de la cavité cylindro-conique correspondante.

Dans un deuxième mode particulier de réalisation de l'invention, les alvéoles sont des prismes triangulaires, les trois arêtes de chaque prisme qui sont parallèles entre elles étant parallèles à l'axe de rotation du rotor, et le fond de chaque alvéole le long de l'une de ces trois arêtes étant arrondi longitudinalement.

D'autres formes évasées d'alvéoles sont également possibles.

Suivant une caractéristique particulière de la présente invention, un compte-tour totalisateur est branché sur l'axe de rotation du rotor, avec une remise à zéro. Dans le domaine des vitesses de rotation du rotor où le débit de matière pulvérulente est proportionnel à la vitesse de rotation, le compte-tour totalisateur, s'il est gradué en kilogrammes de matière, permet d'afficher, d'une part, le débit instantané, par exemple en kilogrammes par minute, et, d'autre part, la quantité totale de matière pulvérulente introduite depuis la dernière remise à zéro, par exemple depuis le début d'une opération, ou encore depuis le début d'un poste de travail.

Dans le domaine des grandes vitesses de rotation du rotor, pour lesquelles le débit instantané de matière croît moins vite que la vitesse de rotation, ou bien même décroît lorsque celle-ci augmente, par suite d'un remplissage incomplet des alvéoles (donc dans un domaine moins intéressant en pratique) on peut intercaler, entre le compte-tour et l'affichage numérique de la quantité de matière introduite depuis la dernière remise à zéro, un dispositif électrique, ou encore un dispositif mécanique, à cames par exemple, qui tient compte de la relation d'étalonnage existant entre le débit instantané de matière pulvérulente et la vitesse de rotation du rotor.

Comme on le comprend, un premier avantage du dispositif selon l'invention est que la forme évasée des alvéoles évite tout risque de colmatage de la matière pulvérulente dans ces alvéoles, à condition toutefois qu'elle soit suffisamment sèche.

Un deuxième avantage, résultant de la configuration des alvéoles en quinconce ou en hélices, est que le remplissage du rotor et sa vidange dans la conduite de transport s'effectuent de façon régulière et continue, contrairement aux distributeurs tournants à cellules de types connus, qui déversent successivement le contenu de chacune de leurs cellules, avec un temps mort, plus ou moins long, entre le déversement de deux cellules successives.

6

Un autre avantage de l'invention est constitué par l'excellente étanchéité réalisée par les deux paires de patins du stator qui s'appliquent sans jeu, en compression, contre la surface tournante du rotor. Ceci est important, car il est ainsi possible de maintenir au-dessus du rotor, donc dans le récipient de stockage, une pression qui, bien qu'un peu supérieure en pratique à la pression atmosphérique, peut rester bien inférieure à la pression de transport dans la conduite située au-dessous du rotor. C'est là un avantage notable du dispositif selon l'invention par rapport aux distributeurs pneumatiques connus. C'est aussi un avantage notable par rapport aux distributeurs tournants à cellules de types connus, dont l'étanchéité laisse souvent à désirer. C'est pourquoi le dispositif selon l'invention mérite bien son appellation de "pompe distributrice de matières pulvérulentes", en ce sens que l'amont et l'aval peuvent se trouver sans inconvénient à des pressions notablement différentes.

Un autre avantage de l'invention est de fournir un affichage numérique d'une part du débit instantané de matière pulvérulente, et d'autre part de la quantité de matières introduite depuis la précédente remise à zéro. Ces deux indications peuvent d'ailleurs être reliées à un dispositif enregistreur, fournissant, en fonction du temps, d'une part une courbe de débit instantanée, et d'autre part une courbe de la quantité totale introduite.

En résumé, cette pompe distributrice selon l'invention permet d'obtenir des débits stables et réguliers de matière pulvérulente, sans aucune pulsation, avec une excellente étanchéité, malgré la différence de pression entre l'amont et l'aval. Elle permet également de faire varier les débits, en service, dans une large gamme, en jouant simplement sur la vitesse de rotation du rotor.

Lors de la conception, on peut, en outre, jouer sur les paramètres suivants :

7

- diamètre extérieur du rotor,

- dimensions et nombre d'alvéoles,

- nombre de disques, dans le cas d'un rotor à disques juxtaposés.

Dans ce dernier cas, un autre avantage de l'invention est la facilité de fabrication et de montage du rotor, à un prix très modéré.

Afin de bien faire comprendre l'invention, on va décrire ci-après, à titre d'exemple non limitatif, un mode de réalisation d'une pompe distributrice de matière pulvérulente selon l'invention dont le rotor comprend seulement deux disques pour la simplicité de la description. Mais il est bien entendu qu'un rotor selon l'invention peut comporter éventuellement beaucoup plus de deux disques.

La figure 1 est une coupe verticale d'un premier dispositif à alvéoles coniques, dans le plan vertical de l'axe de rotation, avec, en surimposition, une représentation simplifiée des alvéoles vus en perspective.

La figure 2 est une coupe verticale selon AA de ce même dispositif, selon un plan perpendiculaire à l'axe de rotation, avec une représentation des alvéoles du rotor selon le plan médian d'un disque.

La figure 3 est une coupe radiale et longitudinale de ce même dispositif, selon BB, c'est-à-dire selon le plan de symétrie d'un des patins d'étanchéité.

La figure 4 est une vue extérieure d'un des patins d'étanchéité.

La figure 5, à titre d'exemple, représente la courbe de variations des débits de poudre de charbon pulvérisé en fonction de la vitesse de rotation du rotor d'une pompe distributrice à alvéoles selon l'invention.

La figure 6 est une coupe verticale, perpendiculaire à l'axe du rotor, d'un alvéole, dans le cas où il est constitué par une pièce conique amovible disposée dans une cavité cylindro-conique du rotor.

- La figure 7 est une coupe verticale d'un second dispositif selon l'invention qui comporte trois disques munis d'alvéoles en forme de prismes triangulaires,cette coupe se situant dans le plan vertical de l'axe de rotation, avec, en surimposition, une représentation schématique des alvéoles prismatiques.

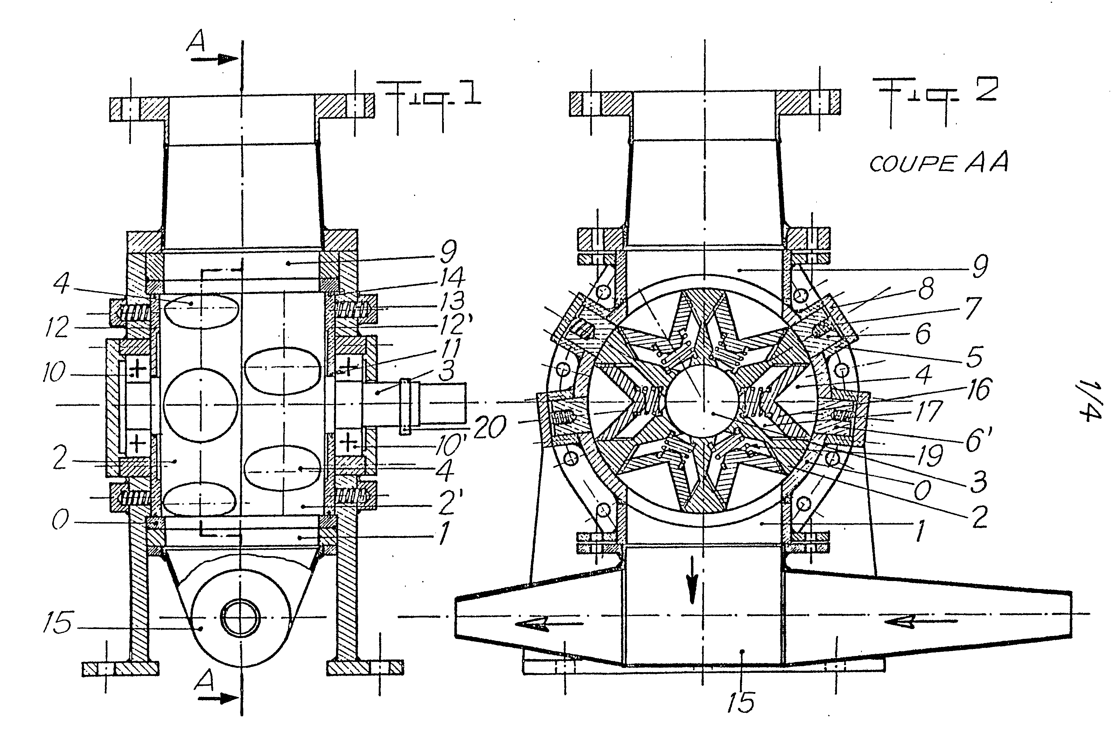

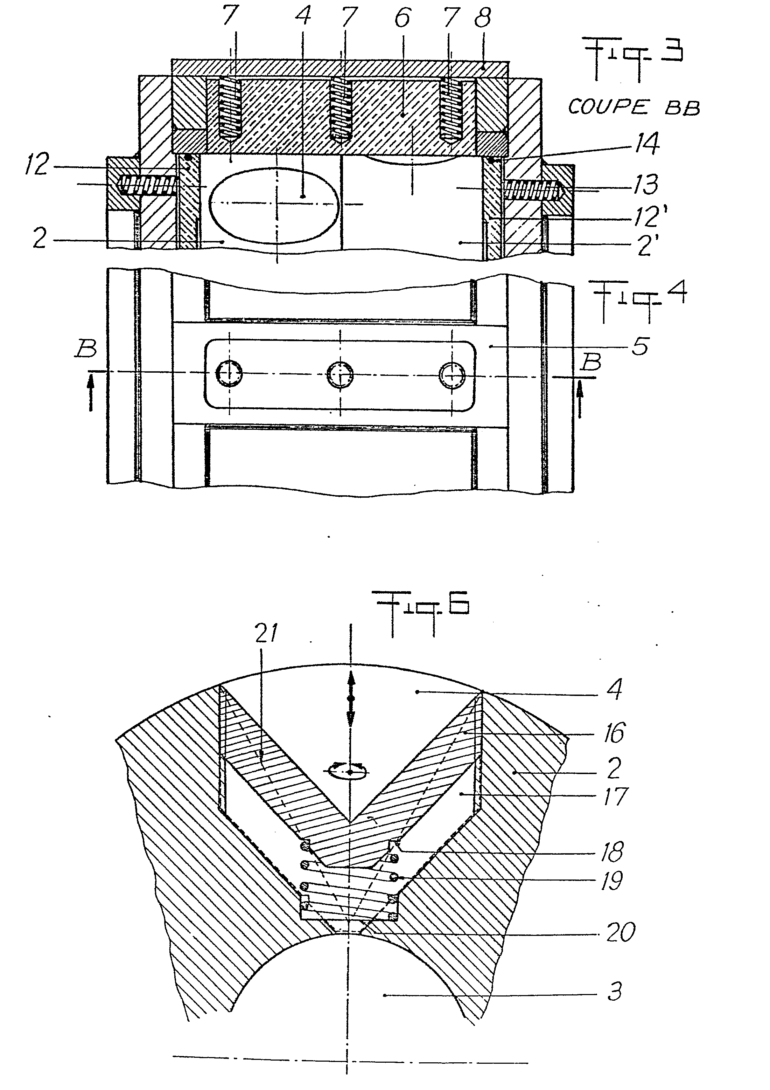

Sur les figures 1 à 6, on voit d'abord que le stator possède en sa partie amont un orifice de remplissage 9 et en sa partie aval un orifice de vidange 1 débitant dans la conduite de transport 15 . Le corps cylindriques 0 du stator comporte quatre ouvertures dans lesquelles viennent se loger quatre patins d'étanchéité 6 réalisés en un matériau spécial anti-grippant et anti-usure. Chaque patin 6 , de forme prismatique, est placé dans un boîtier étanche 5 , fermé par un couvercle 8 et soumis à l'action de trois ressorts de compression 7 , et assure ainsi une excellente étanchéité à l'encontre du passage du gaz de transport. Les deux patins 6 et 6' d'une même paire sont distants l'un de l'autre, d'axe en axe, d'une longueur circonférentielle au moins égale au diamètre d'un alvéole du rotor.

On voit ensuite, sur les figures, que le rotor est constitué de deux disques 2 et 2' montés sur un axe 3 .

Ces disques peuvent être réalisés en différents matériaux, par exemple en acier, ou en un métal non ferreux, ou en granit, etc.

Ils possèdent des alvéoles, tels que 4 , de forme conique ou cylindro-conique, afin d'éviter tout risque de colmatage de la poudre. Les alvéoles du deuxième disque 2' sont décalés par rapport à ceux du premier disque 2 .

Les deux disques 2 et 2' sont serrés entre deux flasques 12 et 12' soumis chacun à l'action de huit ressorts de compression, tels que (13), disposés à 45° l'un de l'autre.

Ces deux flasques comportent, sur leurs circonférences intérieure et extérieure, des bagues d'étanchéité, telles que 11 et 14 , qui évitent toute
fuite latérale de matière pulvérulente ou de gaz de
transport entre le rotor et le stator.

Le rotor constitué par l'ensemble des deux
disques 2 et 2' et des deux flasques 12 et 12'
est placé sur l'axe 3 , monté sur deux roulements
étanches 10 et 10' .

Chacun des deux disques comporte six alvéoles tels que 4 , d'une capacité unitaire de 85 cm 3, soit 510 cm3
pour les 6 alvéoles d'un disque, et 1020 cm3 pour les
deux disques du rotor en question.

Le diamètre des deux disques du rotor est
de 238 mm, et la largeur de chacun des disques est de
88mm.

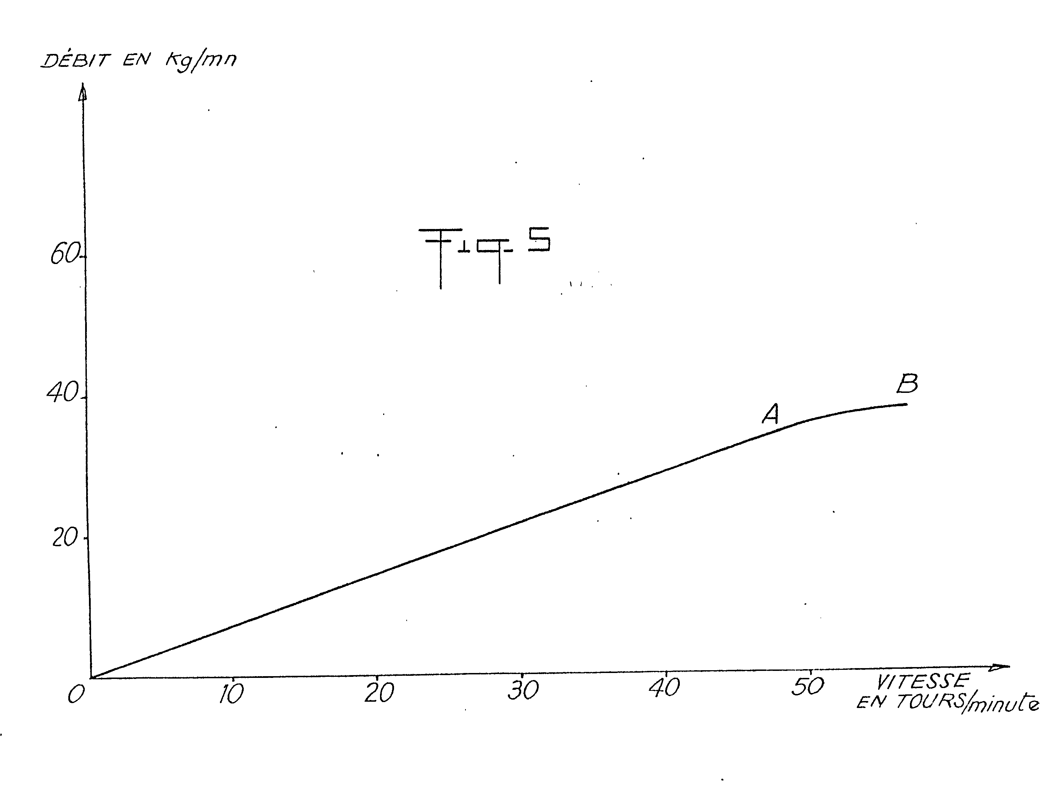

En utilisant cette pompe distributrice à
l'introduction de charbon pulvérisé dans de l'air
comprimé, on a établi une courbe d'étalonnage des débits de poudre en fonction de la vitesse de rotation
du rotor qui est représentée sur la figure 5. En abscisses sont portées les vitesses de rotation en tours
par minute. En ordonnées sont portés les débits de
charbon pulvérisé en kilogrammes par minute.

Sur cette figure 5, on peut observer que,
aux vitesses faibles et moyennes, plus précisément
aux vitesses au plus égales à 50 tours par minutes, qui
constituent d'ailleurs le domaine pratique d'utilisation de cette pompe distributrice, le débit de poudre
est proportionnel à la vitesse de rotation du rotor.

Mais aux grandes vitesses, supérieures à 50
tours par minute, la courbe s'infléchit, c'est-à-dire
qu'elle croit moins vite que selon la droite de proportionalité, et de moins en moins vite pour des vitesses
de rotation de plus en plus grande, parce que les alvéoles ne peuvent plus se remplir complètement du fait
de la trop grande vitesse.

10

Sur la courbe de la figure 5, le domaine de proportionalité est représenté par la droite O A, et le domaine de non-proportionalité par la courbe AB. Pour la régularité et la précision du débit de poudre obtenu, on a intérêt à opérer en pratique dans le domaine de proportionalité O A.

En faisant tourner par exemple le rotor de la pompe selon le présent exemple à 20 tours par minute, on obtient un débit de charbon pulvérisé de 14 kg par minute.

A côté de la pompe distributrice figurent, en affichage numérique, un indicateur de débit de poudre, commandé par le bossage 20 , marquant pour l'exemple qu'on vient de donner 14, et un compteur totalisateur de débit marquant par exemple, au bout d'une heure, 840, c'est-à-dire que 840 kg de poudre ont été introduits, pendant ce temps, depuis la dernière remise à zéro du compteur totalisateur. Bien entendu, en cas de variation du débit, le totalisateur tient compte de cette variation.

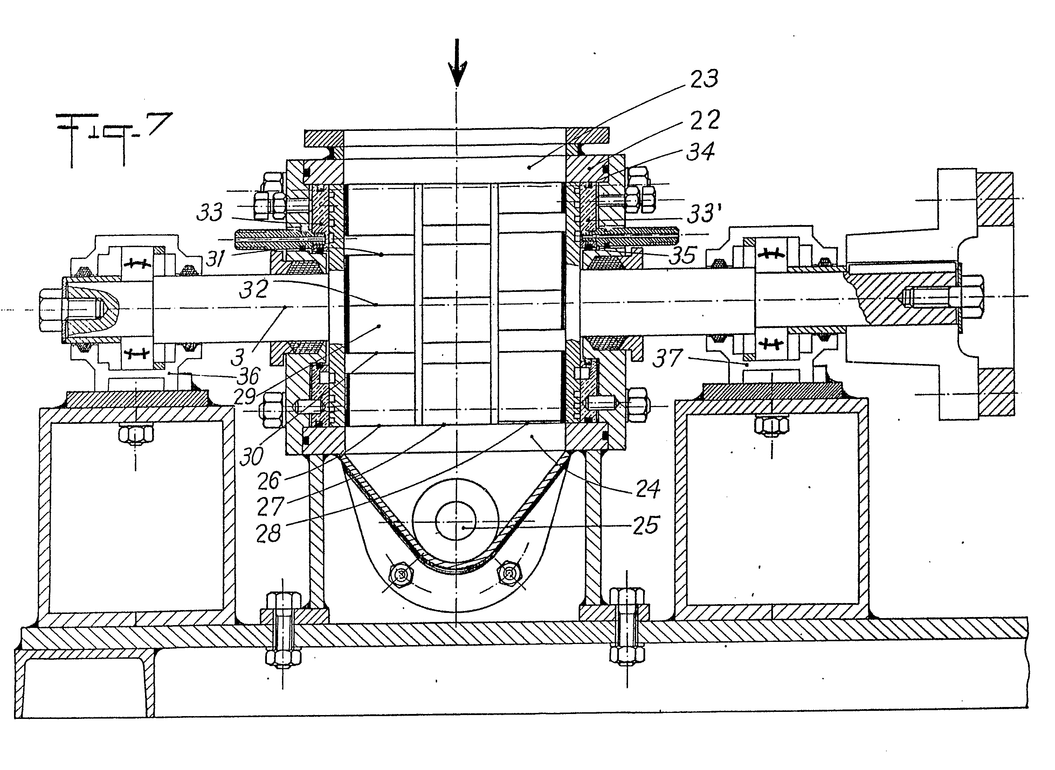

Sur les figures 2 et 6, on voit nettement que les alvéoles tels que 4 sont constitués chacun, dans le présent exemple, par une pièce conique amovible 16 vissée dans une cavité cylindro-conique 17 du rotor. Une échancrure 18 de la base de la pièce 16 s'appuie sur un ressort de compression 19 qui prend lui-même appui sur le fond 20 de la cavité 17 et sert de frein à la pièce vissée 16 .

Il suffit de dévisser la pièce amovible 16 et de la remplacer par une autre pièce amovible 21 (représentée en pointillés) pour que la capacité alvéolaire augmente et que le volume de chaque alvéole passant de 85 cm3 à 170 cm3, le débit de charbon pulvérulent va passer de 14 à 28 kg/minute pour une même vitesse de rotation de 20 tours/minute du rotor.

Sur la figure 7, on voit d'abord que le stator 22 possède en sa partie amont un orifice de remplissage 23 et en sa partie aval un orifice de vidange 24 débitant dans la conduite de transport 25 . Le corps cylindrique 22 du stator comporte quatre ouvertures dans lesquelles viennent se loger quatre patins d'étanchéité non visibles sur la figure 7, mais en tous points semblables aux patins 6 , 6' de la figure 2. Le rotor est ici constitué de trois disques juxtaposés 26 , 27 , 28 , munis d'alvéoles tels que 29 . Un alvéole tel que 29 présente la forme d'un prisme triangulaire. Les trois arêtes du prisme parallèles à l'axe 3 du rotor, sont repérées 30 , 31 , et 32 . L'arête 32 est celle qui est au fond. Elle est schématisée. En fait, le fond de l'alvéole selon 32 est arrondi sur toute la longueur de l'alvéole, c'est-à-dire sur toute la largeur du disque 26 .

Les trois disques 26 27 28 sont serrés entre deux flasques 33 et 33' , comportant, sur leurs circonférences intérieure et extérieure, des bagues d'étanchéité, telles que 34 et 35 , qui évitent toute fuite de matière pulvérulente ou de gaz de transport entre rotor et stator.

Le rotor constitué des trois disques 26 , 27 , 28 et des deux flasques 33 et 33' est placé sur l'axe 3 et monté sur deux roulements 36 et 37 .

Chacun des trois disques comporte six alvéoles tels que 29 , d'une capacité unitaire de 105 cm3, soit 630 cm3 pour les six alvéoles d'un disque, et 1890 cm3 pour les trois disques du rotor en question.

Le diamètre des trois disques du rotor est de 176 mm, et la largeur de chacun des disques est de 60 mm.

D'un disque à l'autre, les alvéoles tels que (29) sont légèrement décalés, et leur configuration est celle de plusieurs arcs d'hélice.

12

Il est bien entendu que l'on peut imaginer des variantes ou des équivalents sans sortir du cadre de l'invention.

C'est ainsi par exemple qu'en aval du cylindre distributeur, la matière pulvérulente n'est pas forcément reprise par un transport pneumatique, mais peut aussi être reprise par une vis sans fin ou par tout autre moyen de transport mécanique.

L'invention s'applique spécialement bien à l'injection de charbon pulvérisé dans les tuyères de Haut-Fourneau, ainsi qu'à l'injection de poudre de chaux dans un courant d'oxygène pour le soufflage des convertisseurs d'affinage des métaux.

## REVENDICATIONS

1.      Pompe distributrice à alvéoles, destinée à mettre en suspension une matière pulvérulente dans un gaz porteur sous pression et en écoulement horizontal constituée par un rotor cylindrique (2) (2'), d'axe horizontal (3), muni d'alvéoles (4) tournant dans un stator (O) recevant la matière pulvérulente par le haut (9) depuis un récipient, et la déversant par le bas (1) dans ledit gaz porteur, cette pompe étant caractérisée en ce que les alvéoles (4) du rotor (2) (2') sont évasés et espacés régulièrement les uns des autres dans un même plan transversal du rotor, les alvéoles de deux plans transversaux voisins étant décalés les uns par rapport aux autres dans le sens circonférentiel, et en ce que le stator (O) comporte deux paires de patins d'étanchéité (6) (6') s'appliquant sans jeu contre la surface dudit rotor et disposés de part et d'autre du plan vertical dudit axe horizontal (3) du rotor, les deux patins (6) et (6') d'une même paire étant distants l'un de l'autre, d'axe en axe, d'une longueur circonférentielle suffisante pour réaliser l'étanchéité au passage de chacun des alvéoles.

2.      Pompe distributrice à alvéoles, selon la revendication 1, caractérisée en ce que son rotor cylindrique est constitué par une pluralité de disques (2) (2') de même diamètre serrés les uns contre les autres entre deux flasques latéraux (12) et (12') soumis chacun à l'action de plusieurs ressorts de compression (13) disposés dans le stator, ces deux flasques (12) et (12') comportant sur leurs circonférences extérieure et intérieure des bagues d'étanchéité (11) et (14), chacun desdits disques (2) (2'), présentant sur sa face externe une rangée circulaire d'alvéoles (4), régulièrement espacés.

3.      Pompe distributrice à alvéoles, selon la revendication 2, caractérisée en ce que les disques (2)(2') sont tous identiques entre eux et que chaque disque (2') se trouve, au montage du rotor, décalé du précédent disque (2), d'une certaine distance circonférentielle, afin que l'ensemble des alvéoles (4) compose à la surface du rotor une configuration générale en quinconce.

4.      Pompe distributrice à alvéoles, selon la revendication 2, caractérisée en ce que les disques (2) (2') sont tous identiques entre eux et que chaque disque (2') se trouve, au montage du rotor, décalé du précédent disque (2), d'une certaine distance circonférentielle, afin que l'ensemble des alvéoles (4) compose à la surface du rotor une pluralité d'hélices.

5.      Pompe distributrice à alvéoles, selon l'une quelconque des revendications 1 à 4, caractérisée en ce que chacun des alvéoles (4) est constitué par une pièce amovible (16) disposée dans une cavité (17) du rotor qui présente un profil approprié à ladite pièce (16).

6.      Pompe distributrice à alvéoles, selon l'une quelconque des revendications 1 à 5, caractérisée en ce que les alvéoles (4) du rotor sont coniques, le sommet du cône, qui constitue le fond de l'alvéole, étant arrondi.

7.      Pompe distributrice à alvéoles, selon les revendications 5 et 6, caractérisée en ce que la pièce conique amovible (16) est vissée dans une cavité cylindro-conique (17) et sa base (18) s'appuie sur un ressort de compression (19) qui prend lui-même appui sur le fond (20) de la cavité cylindro-conique (17).

8.      Pompe distributrice à alvéoles, selon l'une quelconque des revendications 1 à 5, caractérisée en ce que les alvéoles (4) du rotor ont la forme de prismes triangulaires, les trois arêtes de chaque prisme qui sont parallèles entre elles étant parallèles à l'axe de rotation du rotor, et le fond de chaque alvéole étant arrondi longitudinalement.

9. Pompe distributrice à alvéoles, selon l'une quelconque des revendications 1 à 8, caractérisée en ce qu'elle est munie à la fois d'un indicateur de débit de matière pulvérulente, branché sur la rotation du rotor (20) et d'un compte-tour totalisateur de quantité de matière pulvérulente introduite depuis la dernière remise à zéro dudit compte-tour.

10. Pompe distributrice à alvéoles, selon la revendication 9, caractérisée en ce que, si la pompe est utilisée dans un domaine de non-proportionalité entre le débit de poudre et la vitesse de rotation du rotor, on intercale, entre le compte-tour et l'affichage numérique de la quantité de matière introduite depuis la dernière remise à zéro, un dispositif électrique ou mécanique de type connu qui tient compte de la relation d'étalonnage existant entre le débit instantané de poudre et la vitesse de rotation du rotor.

Fig. 1

Fig. 2

COUPE AA

1/4

0066476

0066476

2/4

Fig 3

COUPE BB

Fig 4

Fig 6

Fig 5

DÉBIT EN Kg/mn

60
40
20

0    10    20    30    40    50

VITESSE EN TOURS/minute

A
B

3/4

0066476

Fig-7

23
22
34
33
33'
35
31
32
3
36
29
30
26
27
28
24
25
37

4/4

Office européen
des brevets

**RAPPORT DE RECHERCHE EUROPEENNE**

Numéro de la demande

EP 82 40 0234

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | US-A-3 301 605 (GREENWAY)<br>* Colonne 3, lignes 23-33; colonne 3, lignes 52-57; colonne 4, lignes 14-28; figures 1,3,4 *<br>--- | 1 | B 65 G 53/46 |
| X | US-A-2 565 546 (COLBURN)<br>* Colonne 3, lignes 13-46; figures 1-3 *<br>--- | 1 | |
| A | DE-C- 964 845 (VOLKERT)<br>* Page 2, lignes 34-49; page 2, lignes 63-73; figures 1,2 *<br>----- | 6 | |

DOMAINES TECHNIQUES
RECHERCHES (Int. Cl. ³)

B 65 G

Le présent rapport de recherche a été établi pour toutes les revendications

| Lieu de la recherche | Date d'achèvement de la recherche | Examinateur |
|---|---|---|
| LA HAYE | 12-08-1982 | OSTYN T.J.M. |